# EUROPEAN PATENT APPLICATION

(11) **EP 4 840 801 A1**
(43) Date of publication of application: **18.11.2026**
(21) Application number: 26178262.7
(22) Date of filing: 12.05.2026
(51) Int. Cl.: B65G 54/02, B65B 43/46

(54) **PACKAGE HANDLING ASSEMBLY FOR A PACKAGING MACHINE**

(30) Priority: 15.05.2025 IT 202500010934
(71) Applicant: P.F.M. S.p.A., 36036 Torrebelvicino (Vicenza) (IT)
(72) Inventor: FIORAVANTI, Andrea, 36036 Torrebelvicino (VICENZA) (IT); FIORAVANTI, Paolo, 36036 Torrebelvicino (VICENZA) (IT)
(74) Representative: Sandri, Sandro

(57) **Abstract**

A package handling assembly (100) for handling packages (P) for a packaging machine, wherein each package (P) comprises at least two compartments (Pa, Pb) which are independent and separate from each other. The handling assembly (100) comprises a fixed slide guide (20); a first, a second and a third carriage (31a, 31b, 31c) slidably connected to said slide guide (20) and configured to grasp and move a package (P). The assembly further comprises pick-up means mounted on each first, second and third carriage (31a, 31b, 31c) and actuation means integral to the slide guide (20) and to each first, second and third carriage (31a, 31b, 31c). The actuation means comprises linear actuators of the magnetic type configured to move each first, second and third carriage (31a,31b,31c) continuously and independently so as to enable a corresponding independent movement of each package (P), and to form packages (P) having width dimensions different from each other, in such a way as to enable the adaptation of the configuration of the first, second and third carriages (31a, 31b, 31c) to the dimensions of said package (P) and of the relative compartments (Pa, Pb).

## Description

### TECHNICAL FIELD

The present invention relates to a package handling assembly, in particular intended to be operatively assembled in a packaging machine.

More in detail, the handling assembly according to the invention is included in the sector producing and marketing machines, apparatuses and more generally systems, plants and automatic packaging lines, intended to form a plurality of packages by means of a flexible film, which is shaped to form a sealed packaging for containing a plurality of products.

The assembly according to the invention finds specific application in the field of HFFS ("Horizontal Form Fill Seal") horizontal packaging machines intended to form packages of the "stand-up pouch" or "doypack" type, that is, packages shaped to assume, during use, a configuration erected on themselves. In particular, the assembly according to the invention is configured to move a pair of packages of the "stand-up pouch" type connected to each other so as to form a single package, and having at least two containment compartments which are independent and separate from each other. These packages are commonly referred to as "duo-bag" or "twin-doypack" in the technical jargon of the sector, and are, for example, intended for the combined packaging of products, such as pasta and sauce, dessert and fruit, cappuccino and chocolate, cake mixes and decorations, and others.

### PRIOR ART

It is known, in the technical field of reference, to use packaging handling assemblies for packaging machines such as those briefly mentioned above. In particular, in the specific case of packages of the "duo-bag" or "twin-doypack" type, a packaging machine of the known type typically comprises a frame extending along a work axis, in particular substantially horizontal (i.e. parallel to the ground), configured to fit a plurality of functional assemblies arranged in succession one after the other and cooperating with each other.

More in detail, a known packaging machine comprises a feeding assembly comprising at least one reel of a flexible film (e.g. polyethylene, polypropylene, multilayer, and others) configured to be wound around its own axis of rotation.

The known machine also comprises diverting means configured to receive the flexible film unwound from the reel and direct it in accordance with a direction substantially parallel to the work axis.

The known machine further comprises a forming assembly configured to receive the flexible film and comprising one or more pairs of welding bars, each configured to produce a plurality of welding sections so as to form a plurality of packages, each at least partially closed.

The known machine further comprises a handling assembly configured to pick up each shaped package from the forming assembly and convey it along the work axis, in particular to a filling zone.

Subsequently, each filled package is conveyed by the handling assembly to a closing assembly. The latter is configured to seal each package so as to form a plurality of sealed packages, which are then unloaded from the packaging machine by means of a conveyor belt.

The packaging machine of the type known so far briefly described has proved to be in practice not without drawbacks.

In particular, the main drawback lies in the fact that the machine of the known type is not very flexible and not very versatile. In fact, this machine is equipped with a package handling assembly, which limits the packaging machine on which it is mounted from the point of view of its flexibility and operational versatility. Specifically, this handling assembly has a motion that is known in the technical jargon of the sector by the term "walking step". This type of movement has kinematic limits, as this motion is of the intermittent type and each package is disposed on the handling assembly at respective rigid and well-defined positions, that is, set by the geometry of the parts that make up the handling assembly itself. In addition, this type of movement involves an intermittent and simultaneous movement of all the packages mounted on the handling assembly, and at constant time intervals between them and rigidly dictated by the slower functional assembly present on the packaging machine along the work axis.

A further drawback lies in the fact that the packaging machine of the known type is slow, and this translates into a low or at least unsatisfactory overall production efficiency (i.e. number of packages produced in the unit of time) to meet the needs of large-scale industrial production.

### OBJECTS OF THE INVENTION

An object of the present invention is to provide a package handling assembly for a packaging machine that makes it possible to overcome the drawbacks of the aforementioned prior art.

A further object of the present invention is to provide a package handling assembly that is operatively flexible and versatile. In more detail, the object of the invention is to provide a handling assembly, mountable on a packaging machine, which enables a flexible and versatile movement of each package along the work axis (i.e. along a packaging direction), i.e. able to move each package completely independently of the other surrounding packages, to enable the creation of packages having dimensions different from each other (in particular a width dimension, i.e. a dimension parallel to the work axis).

A further object of the present invention is to provide an accurate and reliable package handling assembly during the operation thereof.

A further object of the present invention is to provide a handling assembly that is easily and quickly realizable and applicable on a packaging machine. A further object of the present invention is to provide a handling assembly having an improved configuration, both in structural and functional terms, with respect to the prior art.

### SUMMARY

All the objects, both individually and in any combination thereof, and others that will emerge from the detailed description that follows, are achieved, according to the invention, with a package handling assembly for a packaging machine having the features specified in independent claim 1. The dependent claims outline particularly advantageous embodiments of the invention.

### BRIEF DESCRIPTION OF THE DRAWINGS

Additional features and advantages of the present invention will appear clearer from the indicative, and therefore not limiting, description of a preferred but not exclusive embodiment of a package handling assembly for a packaging machine, as illustrated in the accompanying drawings, wherein:
- figure 1 shows, according to a perspective view, a package handling assembly in a configuration mounted on a packaging machine, according to an embodiment of the invention;
- figure 2 shows, according to a partial enlarged perspective view, a detail of the handling assembly illustrated in figure 1;
- figure 3 shows, according to a perspective view, a component of the handling assembly illustrated in figure 1;
- figure 4 shows, according to a plan view, a package moved by the assembly illustrated in figure 1-3.

With reference to the drawings, they serve solely to illustrate embodiments of the invention with the aim of better clarifying, in combination with the description, the inventive principles at the basis of the invention.

### DETAILED DESCRIPTION OF THE INVENTION

With reference to the accompanying figures, a package handling assembly according to the present invention has been indicated overall with number 100.

The handling assembly 100 is intended to be operatively installed in a packaging machine, indicated overall with number 101; and in particular of the HFFS (i.e. Horizontal Form Fill Seal) type, suitable for forming a plurality of packages in a flexible film, at least partially made of a polymeric material (e.g. polyethylene, polypropylene, multilayer, and others), to wrap one or more products to be packaged (such as those mentioned at the beginning) around a sealed packaging.

Specifically, the packaging machine 101 comprises a plurality of functional assemblies cooperating with each other and arranged in succession along a packaging direction, corresponding to the direction along which the machine itself extends (in particular a horizontal direction parallel to the ground and defined by a first axis Y-Y as described in more detail below).

The packaging machine 101 comprises:
- at least one flexible film feeding assembly, comprising at least one reel;
- at least one unwinding assembly configured to unwind the flexible film from the reel, direct and convey it parallel along the first axis Y-Y;
- at least one forming assembly configured to receive the film and make a plurality of welding sections so as to create an at least partially closed package;
- at least one handling assembly 100 (subject-matter of the present invention and described in detail below) configured to pick up each package and convey it along the first axis Y-Y;
- at least one filling assembly configured to dispense a predefined quantity of at least one product into each package;
- at least one closing assembly configured to seal each filled package so as to create a substantially airtight packaging; and
- at least one unloading assembly configured to unload each package from the machine, for example towards a package collection area.

The packaging machine 101 according to the invention is particularly equipped to form packages of the "stand-up pouch" or "doypack" type, and the handling assembly 100 associated with it is configured to move these types of packages.

Operatively, a package of the "stand-up pouch" or "doypack" type has a bottom portion having a square or rectangular shape, which enables the package itself to assume, during use, an erected (i.e. vertical) position. In other words, stand-up type packages are packages specially shaped to stand on their own when resting on a support surface.

As illustrated in the attached figures, the handling assembly 100 according to the invention is specifically intended to move stand-up pouch-type packages connected in pairs with each other, i.e. defining a package referred to in the technical jargon of the sector by the term "duo-bag" or "twin-doypack".

In other words, such packages are made by connecting together two packages of the stand-up pouch type, at a respective side edge. In this way, it is possible to obtain a stand-up pouch package that has two distinct and independent containment compartments, each suitable for accommodating a specific product (such as those mentioned at the beginning).

As a result, duo-bag-type packages are particularly suitable for packaging a combination of different products, typically purchased in pairs, such as pasta and sauce, dessert and fruit, cappuccino and chocolate, cake mixes and decorations, and others.

In the following description, specific reference will be made to a handling assembly adapted to move packages of the duo-bag or twin-doypack type, in a non-limiting way, that is, this handling assembly will be able to move other configurations of packages of the stand-up pouch type without thereby falling outside the scope of protection.

As just mentioned, each package P comprises at least two compartments Pa, Pb which are independent and separate from each other. Preferably such compartments Pa, Pb are arranged side by side and extend vertically (i.e. orthogonal to the ground) so as to enable them to be filled from top to bottom.

In accordance with the embodiment of the invention illustrated in the attached figures, a handling assembly 100 for handling packages P for a packaging machine 101 comprises a fixed slide guide 20, in particular integrally connected to a frame of the machine 101 itself (introduced and described in more detail below), and extending mainly along a first axis Y-Y.

More specifically, the first axis Y-Y is substantially horizontal, i.e. parallel to the ground, and defines a direction of conveyance of a plurality of packages P through the packaging machine 101.

The handling assembly 100 further comprises a first, a second and a third carriage 31a, 31b, 31c arranged, during use, side by side so as to define a unit for conveying a package P.

Each first, second and third carriage 31a, 31b, 31c is slidably connected to the slide guide 20 and is configured to grasp and move a package P, at least partially closed, along the first axis Y-Y.

In particular, each first, second and third carriage 31a, 31b, 31c comprises a plurality of rollers 33 (or rolls), each rotatably mounted on a respective first, second and third carriage 31a, 31b, 31c so as to enable it to slide along the slide guide 20.

The handling assembly 100 further comprises pick-up means mounted on each first, second and third carriage 31a, 31b, 31c and configured to pick up and hold in position each package P along the first axis Y-Y.

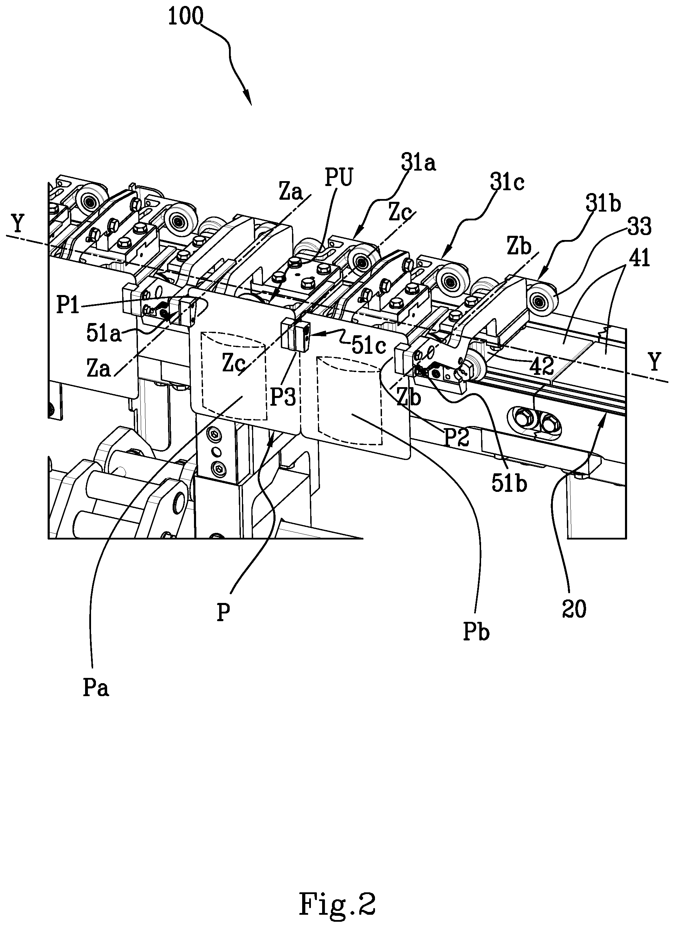

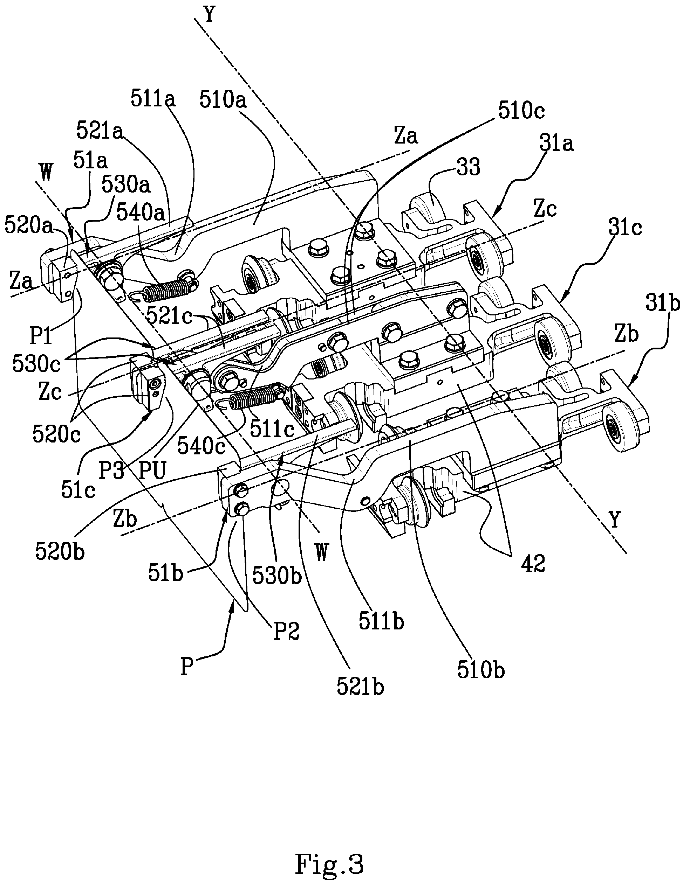

More specifically, in accordance with the embodiment illustrated in detail in figures 2 and 3, said pick-up means each comprises at least one mechanical gripper 51a, 51b, 51c, which comprises an arm 510a, 510b, 510c extending along a respective second axis Za-Za Zb-Zb, Zc-Zc, transverse to the first axis Y-Y, in particular preferably orthogonal, so as to protrude projectingly with respect to each first, second and third carriage 31a, 31b, 31c on which it is mounted.

In other words, as illustrated in detail in figures 2 and 3, each arm 510a, 510b, 510c extends cantilevered with respect to each first, second and third carriage 31a, 31b, 31c on which it is mounted and therefore also with respect to the slide guide 20.

Each mechanical gripper 51a, 51b, 51c further comprises a fixed portion 520a, 520b, 520c connected at an end of the arm 510a, 510b, 510c defining a mechanical stop.

In other words, the fixed portion 520a, 520b, 520c is a mechanical abutment, in particular an end-of-travel.

Each mechanical gripper 51a, 51b, 51c further comprises a movable portion 530a, 530b, 530c, rotatably connected to the respective arm 510a, 510b, 510c and rotatable about a third axis W-W, transverse to a respective second axis Za-Za, Zb-Zb, Zc-Zc, in order to be set between a position for releasing and a position for retaining each package P during a movement along the first axis Y-Y.

More in detail, the movable portion 530a, 530b, 530c cooperates with a respective fixed portion 520a, 520b, 520c of each mechanical gripper 51a, 51b, 51c, mutually moving towards and/or away from the latter during a rotation around the third axis W-W.

In particular, the movable portion 530a, 530b, 530c in said retaining position defines a position for closing or stapling each package P and has a rest configuration. Otherwise, the movable portion 530a, 530b, 530c in said releasing position defines an opening position, i.e. position for freeing each package P.

Each mechanical gripper 51a, 51b, 51c further comprises at least one return spring 540a, 540b, 540c, connected at the respective ends to the arm 510a, 510b, 510c and to the movable portion 530a, 530b, 530c, and configured to exert a force of elastic return of the movable portion 530a, 530b, 530c between the releasing and retaining position.

More in detail, each spring 540a, 540b, 540c is suitable for exerting a force of elastic return acting on the movable portion 530a, 530b, 530c of each mechanical gripper 51a, 51b, 51c, which tends to return it from the releasing position towards the retaining position.

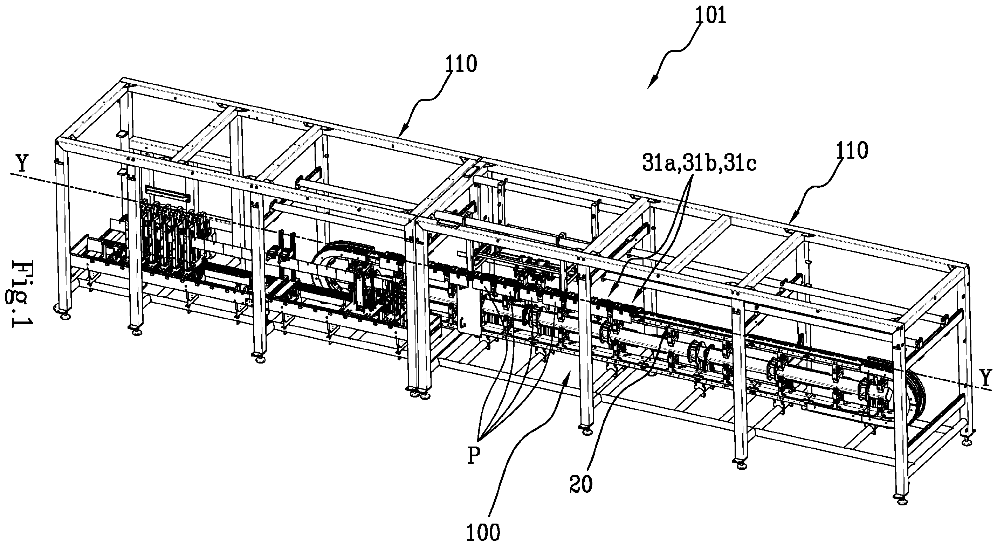

In accordance with the embodiment of the invention illustrated in the attached figures 1-3, the handling assembly 100 further comprises actuation means integrally mounted on the slide guide 20 and on each carriage 31a, 31b, 31c.

In particular, the actuation means comprising linear actuators of the magnetic type configured to move each first, second and third carriage 31a, 31b, 31c continuously and independently so as to enable a corresponding independent movement of each package P, and to form packages P having width dimensions different from each other.

Specifically, the term width dimension refers to a dimension parallel to the first axis Y-Y along which each package P extends.

Advantageously, the aforementioned actuation means is configured to enable a conveyance along the first axis Y-Y of packages P each having a width dimension different from the other, as well as different width dimensions of the respective compartments Pa, Pb.

Advantageously, the mechanical grippers 51a, 51b, 51c are configured to grasp each package P at respective contact portions disposed at the side of each compartment Pa, Pb, enabling a movement, and therefore a packaging, of a plurality of packages of the duo-bag or twin-doypack type, that is, having at least two compartments Pa, Pb which are independent and separate from each other.

Preferably, each package P with the respective compartments Pa, Pb may have its own width dimension (along the first axis Y-Y) as well as width dimensions of the respective compartments Pa, Pb equal to each other.

In other words, the handling assembly 100 is completely flexible and versatile as it enables to move any package P having its own width dimension and any of its compartments Pa, Pb.

According to one aspect of the invention, the pick-up means comprises a first mechanical gripper 51a configured to grasp a first edge portion P1 of a package P. As illustrated in figures 2 and 3, the first edge portion P1 is a lateral perimeter portion of each package P.

The pick-up means 50b further comprises a second mechanical gripper 51b configured to grasp a second edge portion P2 of the package P.

Similarly to what has been said about the first edge portion P1, the second edge portion P2 is a lateral perimeter portion, and opposite the first edge portion P1.

The pick-up means 50c further comprises a third mechanical gripper 51c interposed between the first and second mechanical grippers 51a, 51b and configured to grasp an intermediate portion P3 arranged between each compartment Pa, Pb.

In other words, the third mechanical gripper 51c is a central gripper with respect to the first and second mechanical grippers 51a, 51b, and the intermediate portion P3 is comprised between the first and second edge portions P1, P2 and divides the aforementioned compartments Pa, Pb.

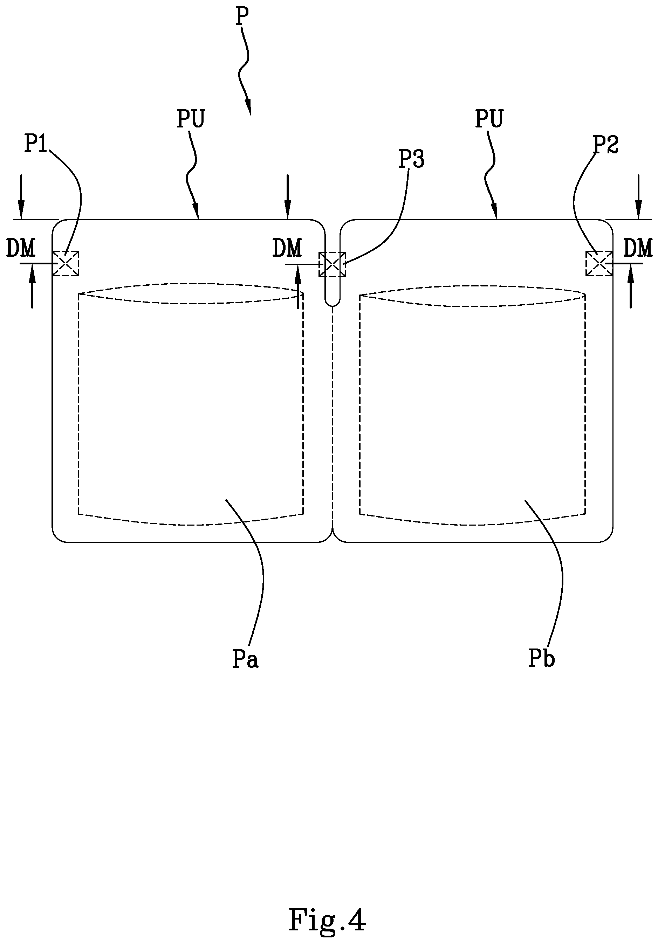

As illustrated in figure 4, the first and second edge portions P1, P2 and the intermediate portion P3 are preferably disposed aligned with each other and parallel to the first axis Y-Y.

According to one aspect of the invention, the first, second and third mechanical grippers 51a, 51b, 51c are configured to define a clamp- or guillotine-type closure of each package P.

In other words, each package P in said retaining configuration, i.e. with the movable portion 530a, 530b, 530c set against the respective fixed portion 520a, 520b, 520c, tends to fall towards the ground by effect of the force of gravity. This results in a strong and stable clamp or guillotine closure of the package, avoiding any detachment or slippage of the package during its conveyance.

According to one aspect of the invention, illustrated in detail in figure 2-3, the first, second and third mechanical grippers 51a, 51b, 51c are positioned, during use, at a lowered position relative to an upper edge PU of each package P, and equal to a predefined value of minimum distance DM relative to said upper edge PU.

In other words, each mechanical gripper 51a, 51b, 51c is configured to be positioned, during use, at a lowered vertical level, relative to the upper edge PU of each package P, and equal to said predefined value of minimum distance DM (see figure 4). In this way, each package has a free band of flexible film within which to perform a sealing weld of each package.

Said predefined value of minimum distance MD is preferably comprised between 10 and 50 millimetres, even more preferably comprised between 15 and 30 millimetres.

Advantageously, this value of minimum distance DM defines the free space band, that is, within which the compartments Pa, Pb do not extend, necessary for performing a sealing weld of each package P (carried out by a closing assembly arranged downstream of the handling assembly 100). Preferably, the first and second mechanical grippers 51a, 51b are respectively configured as right and left mechanical grippers, i.e. suitable for grasping respective first and second side portions P1, P2 arranged on the respective right and left sides of each package P.

Otherwise, according to an aspect of the invention illustrated in figure 3, the third mechanical gripper 51c is preferably of the dual type, and comprises a first and a second mechanical gripper 51a, 51b connected to each other and arranged side by side. In other words, the third mechanical gripper 51c is a gripper configured both as right and left gripper, obtained by coupling together a first and a second mechanical gripper 51a, 51b.

In other words, the third mechanical gripper 51c is configured to clamp the intermediate portion P3, i.e. a portion arranged along the width dimension of each package P and comprised between the first and second portions P1, P2 (see figure 4).

In accordance with the embodiment of the invention, the linear actuators of a magnetic type (introduced above) comprise a plurality of linear stators 41 (see Fig. 2) integrally mounted with the slide guide 20, and arranged in succession one after another so as to substantially cover a perimeter extension of the slide guide 20 itself.

In addition, such magnetic linear actuators comprise a plurality of magnets 42 integrally mounted on each carriage 31a, 31b, 31c so as to define a magnetic conveyor unit slidably movable along the slide guide 20. Specifically, the magnetic conveyor unit is configured to interact with the plurality of linear stators 41 to produce a movement of each first, second and third carriage 31a, 31b, 31c independently of the adjacent carriages. According to one aspect of the invention, the handling assembly 100 comprises an electronic control unit, preferably positioned in a control panel of the packaging machine 101 proximal or distal with respect to the assembly itself, and connected to each of the linear stators 41 and the magnets 42, and thus consequently to each first, second and third carriage 31a, 31b, 31c.

More in detail, the electronic control unit is configured to receive, process and send at least one signal between each linear stator 41 and each magnet 42 so as to transmit a predefined repositioning value to each first, second and third carriage 31a, 31b, 31c.

In other words, the electronic control unit is suitable for controlling a movement of each first, second and third carriage 31a, 31b, 31c independently of the other carriages.

Advantageously, the handling assembly 100 and therefore the packaging machine 101 on which the assembly 100 is mounted is completely flexible and versatile in that by independently moving each first, second and third carriage 31a, 31b, 31c, it is able to form packages having both a width dimension different from the other, as well as dimensions of the respective containment compartments Pa, Pb that are also different from each other. As a result, the packaging machine 101 is able to move, and therefore package, a varied combination of width dimensions of packages of the duo-bag type, suitable for satisfying a variety of packaging needs of products combined with each other (e.g. sauce and pasta).

As illustrated in figure 1, the slide guide 20 defines a path having an oblong or rectangular or square shape.

In particular, the slide guide 20 defines a closed circuit that can be traversed by the first, second and third carriages 31a, 31b, 31c.

According to one aspect of the invention, each arm 510a, 510b, 510c of each mechanical gripper 51a, 51b, 51c has a convex portion 511a, 511b, 511c positioned at an elongate element 521a, 521b, 521c of the movable portion 530a, 530b, 530c, so as to enable an advancement beyond the same arm 510a, 510b, 510c of each first, second and third carriage 31a, 31b, 31c to configure the movable portion 530a, 530b, 530c in the releasing position.

In other words, each arm 510a, 510b, 510c of each mechanical gripper 51a, 51b, 51c has a curved, shaped and lowered, portion thereof to enable an external body integral with the packaging machine 101 to intercept, and then operate, the movement of the elongate element 521a, 521b, 521c of the movable portion 530a, 530b, 530c, by means of a rotation around the third axis W-W, so as to configure the movable portion 530a, 530b, 530c itself in the releasing position and thus enable freeing each package.

In accordance with an embodiment of the invention not illustrated in the attached figures, the pick-up means each comprising at least one pneumatic suction cup.

More in detail, each pneumatic suction cup is mounted on a respective first, second and third carriage 31a, 31b, 31c, and are configured to pick up, retain and release each package P during a movement of the packages P themselves along the first axis Y-Y.

Preferably, each first, second and third carriage 31a, 31b, 31c fits a plurality of pneumatic suction cups, for example a pair or more of pneumatic suction cups.

These pneumatic suction cups are operated by actuation means of the pneumatic type, i.e. connected to one or more feeding pipes carrying compressed air.

The actuation means of the pneumatic type also comprises at least one compressor for the generation of compressed air, and valves for regulating, shutting off and measuring the compressed air produced and conveyed to each pneumatic suction cup.

Such pneumatic actuation means is well known to a person skilled in the art, and therefore, not further described.

A packaging machine 101 is also the subject-matter of the present invention, of which the same numerical references will be maintained for simplicity of exposure.

In particular, the packaging machine 101 comprises a frame 110 extending mainly along the first axis Y-Y; and a handling assembly 100 integrally mounted on the frame 110.

More in detail, the handling assembly 100 has one or more of the characteristics described above.

## Claims

1. A package handling assembly (100) for handling packages (P) for a packaging machine, wherein each package (P) comprises at least two compartments (Pa, Pb) which are independent and separate from each other:
said handling assembly (100) comprising:
- a fixed slide guide (20), extending mainly along a first axis (Y-Y);
- a first, a second and a third carriage (31a, 31b, 31c) arranged, during use, side by side so as to define a unit for conveying a package (P); each first, second and third carriage (31a, 31b, 31c) being slidably connected to said slide guide (20) and configured to grasp and move a package (P), at least partially closed, along said first axis (Y-Y); wherein said first, second and third carriages (31a, 31b, 31c) are configured to cooperate on a single package (P) in such a way as to grasp different portions of the same package (P);
- pick-up means mounted on each first, second and third carriage (31a, 31b, 31c) and configured to pick up and hold in position each package (P) along said first axis (Y-Y);
- actuation means integrally mounted on said slide guide (20) and on each first, second and third carriage (31a,31b,31c), said actuation means comprising linear actuators of the magnetic type configured to move each first, second and third carriage (31a,31b,31c) continuously and independently so as to enable a corresponding independent movement of each package (P), and to form packages (P) having width dimensions different from each other;
**characterized in that** said first, second and third carriages (31a, 31b, 31c) are configured to cooperate on a single package (P) in such a way as to grasp different portions of the same package (P);
**in that** said actuation means is configured to enable a conveyance along said first axis (Y-Y) of packages (P) each having a width dimension different from the other, as well as different width dimensions of the respective compartments (Pa, Pb);
and **in that** the pick-up means is configured to grasp each package (P) at respective contact portions disposed at the side of each compartment (Pa, Pb) in such a way as to enable the adaptation of the configuration of the first, second and third carriages (31a, 31b, 31c) to the dimensions of said package (P) and of the relative compartments (Pa, Pb).

2. The handling assembly (100) according to claim 1, wherein said pick-up means each comprising at least one mechanical gripper (51a, 51b, 51c) comprising:
- an arm (510a, 510b, 510c) extending along a respective second axis (Za-Za, Zb-Zb, Zc-Zc), transverse to said first axis (Y-Y); projecting with respect to each first, second and third carriage (31a,31b,31c);
- a fixed portion (520a, 520b, 520c) connected at one end of said arm (510a, 510b, 510c) and defining a mechanical stop;
- a movable portion (530a, 530b, 530c), rotatably connected to said arm (510a, 510b, 510c) and rotatable about a third axis (W-W), transverse to said respective second axis (Za-Za, Zb-Zb, Zc-Zc), in order to be set between a position for releasing and a position for retaining each package (P), respectively, during a movement along said first axis (Y-Y), and
- at least one return spring (540a, 540b, 540c), connected at the respective ends to said arm (510a, 510b, 510c) and to said movable portion (530a, 530b, 530c), and configured to exert a force of elastic return on said movable portion (530a, 530b, 530c) between said releasing and retaining positions;
wherein said mechanical grippers (51a, 51b, 51c) are configured to grasp each package (P) in respective contact portions disposed at the side of each compartment (Pa, Pb).

3. The handling assembly (100) according to claim 1 or 2, wherein said pick-up means comprises:
- a first mechanical gripper (51a) configured to grasp a first edge portion (P1) of a package (P);
- a second mechanical gripper (51b) configured to grasp a second edge portion (P2) of the package (P), opposite the first edge portion (P1), and
- a third mechanical gripper (51c) interposed between said first and second mechanical grippers (51a, 51b) and configured to grasp an intermediate portion (P3) disposed between each compartment (Pa, Pb).

4. The handling assembly (100) according to claim 3, wherein said first, second and third mechanical grippers (51a, 51b, 51c) are configured to define a clamp- or guillotine-type closure of each package (P).

5. The handling assembly (100) according to claim 1 or 2, wherein each of said first, second and third mechanical grippers (51a, 51b, 51c) are positioned, during use, in a lowered position relative to an upper edge (PU) of each package (P), and equal to a predefined value of minimum distance (DM) relative to said upper edge (PU).

6. The handling assembly (100) according to claim 2, wherein said third mechanical gripper (51c) is of the dual type and comprises a first and a second mechanical gripper (51a,51b) connected to each other and arranged side by side.

7. The handling assembly (100) according to any one of the preceding claims, wherein said linear actuators of a magnetic type comprise:
- a plurality of linear stators (41) integrally mounted on said slide guide (20), and arranged in succession one after another so as to substantially cover a perimeter extension of said slide guide (20) itself;
- a plurality of magnets (42) integrally mounted on each of said first, second and third carriages (31a,31b,31c) so as to define a magnetic conveyor unit slidably movable along said slide guide (20);
said magnetic conveyor unit being configured to interact with said plurality of linear stators (41) to produce a movement of each first, second and third carriage (31a, 31b, 31c) independently of the adjacent carriages.

8. The handling assembly (100) according to any one of the preceding claims, comprising an electronic control unit connected to each of said linear stators (41) and said magnets (42);
said electronic control unit being configured to receive, process and send at least one signal between each linear stator (41) and each magnet (42) so as to transmit a predefined repositioning value to each first, second and third carriage (31a, 31b, 31c).

9. The handling assembly (100) according to any one of the preceding claims, wherein said slide guide (20) defines a path having an oblong or rectangular or square shape.

10. The handling assembly (100) according to any one of the preceding claims, wherein each arm (510a, 510b, 510c) of each mechanical gripper (51a, 51b, 51c) has a convex portion (511a, 511b, 511c) positioned at a respective elongate element (521a, 521b, 521c) of said movable portion (530a, 530b, 530c), so as to enable an advancement of each first, second and third carriage (31a, 31b, 31c) beyond said arm (510a, 510b, 510c) to configure said movable portion (530a, 530b, 530c) in said release position.

11. A packaging machine (101) comprising:
- a frame (110) extending mainly along a packaging axis (Y-Y); and
- a handling assembly (100) in accordance with any one of claims 1 to 10.
